# EUROPEAN PATENT APPLICATION

(11) **EP 1 258 404 A2**
(43) Date of publication of application: **20.11.2002**
(21) Application number: 02253450.7
(22) Date of filing: 15.05.2002
(51) Int. Cl.: B60T 1/06, F16D 55/32

(54) **Drag bearing of a bearing and brake unit for a vehicle wheel**

(30) Priority: 18.05.2001 DE 10125208
(71) Applicant: Visteon Global Technologies, Inc., Dearborn, Michigan 48126-2490 (US)
(72) Inventor: Svensson, Thomas, 50939 Köln (DE); Wallentin, Markus, 41253 Goteborg (SE)
(74) Representative: McLean, Robert Andreas

(57) **Abstract**

A drag bearing (46) of a bearing and brake unit for a vehicle wheel, the drag bearing (46) having a) at least one holding device for fastening the drag bearing (46), b) an integrated cylinder (52) of a cylinder and piston unit provided with a cylinder's axis (54) and c) a wheel carrier (48) which is centered on a rotational axis (28) and is configured to receive a wheel bearing (38). The drag bearing (46) is furthermore provided with d) a guide arm (58) which is connected integral with the remaining drag bearing (46), which is oriented substantially parallel to the rotational axis (28) and to the cylinder's axis (54) and which is provided with guide way(60)s serving to receive brake pads (64).

## Description

The invention relates to a drag bearing of a bearing and brake unit for a vehicle wheel as well as to a bearing and brake unit with such a drag bearing. It is related to a drag bearing of a bearing and brake unit for a vehicle wheel, the drag bearing having a) at least one holding device for fastening the drag bearing, b) an integrated cylinder of a cylinder and piston unit provided with a cylinder's axis and c) a wheel carrier which is centered on a rotational axis and is configured to receive a wheel bearing.

A bearing and disk brake unit of this type forms the subject of WO 98/25804. It has, in immediate proximity to the cylinder, a bearing surface for a separate guide arm. Said guide arm in turn has a free end to which may be added an end piece. The guide arm forms guide ways for brake pads. Said brake pads have guiding means matching the guide ways. As a result thereof, the brake pads can be displaced parallel to the cylinder's axis along the guide ways. The brake pads are retained in the guide ways. Said guide ways also take the reaction forces of braking.

The connection of the drag bearing with the guide arm and the end piece is effected by two studs. Said studs are screwed into bores from the side which is turned away from the end piece, said bores being oriented parallel to the cylinder's axis and passing through the drag bearing on the one hand and through the guide arm on the other hand. The heads of said studs are quite difficult to access, they are located, according to the WO-document cited, on the side of the bearing and brake unit which is turned away from the wheel.

Furthermore, precise positioning of the guide arm relative to the drag bearing is not always achieved on account of the screw connection. In particular during maintenance works it cannot be made certain that the contacting surfaces of drag bearing and guide arm are accurately positioned, completely free of dirt and connected in such a manner that the guide ways of the guide arm are exactly parallel to the cylinder's axis, thus being oriented toward the rotational axis. There is moreover the problem of manufacturing inaccuracy which has basically to be taken into consideration.

Eventually, large forces are transmitted via the relatively long studs. The thermal braking loads the entire unit is subjected to during the process of braking occasion different thermal expansions and high loads. This causes problems.

This is where the invention sets in. It is directed to improve the connection between guide arm and drag bearing so that the parallelism of the guide ways relative to the cylinder's axis is always secured, high solidity is achieved and mounting and upkeep facilitated.

Starting with the drag bearing of the type mentioned herein above for a bearing and brake unit, the solution is to still provide the drag bearing with a guide arm which is connected integral with the remaining drag bearing, which is oriented substantially parallel to the rotational axis and to the cylinder's axis and which is provided with guide ways serving to receive brake pads.

According to the invention, the pivot arm is an integral part of the drag bearing. As a result thereof, the orientation of the guide ways with respect to the cylinder's axis is predetermined and can no longer be altered during mounting and upkeep. The braking forces acting on the guide arm are directly applied to the remaining parts of the drag bearing. The mounting of the brake pads is facilitated as a result thereof in such a manner that the end piece, which is anchored to the guide arm of the drag bearing by means of relatively short screws, only needs to be screwed off. For this purpose, the guide arm is provided with threaded bores, more specifically with threaded blind holes. The heads of the fastening screws may now be accessed from the side of the wheel.

On the whole, the number of parts is reduced, the conditions for transmitting the forces are improved, mounting and upkeep are considerably facilitated. Now, the brake pads are precisely positioned with respect to the brake disks. The rotational axis is oriented parallel to the guide ways.

The drag bearing according to the invention can preferably be manufactured in such a manner that both the guide ways and the cylinder of the cylinder and piston unit and, preferably, the wheel carrier as well, be machined in one setting. As a result thereof, the guide ways, the cylinder's axis and the rotational axis are paralleled. This parallelism cannot be altered during the mounting procedure and subsequent upkeep since it is predetermined by the drag bearing itself.

Further advantages and characteristics of the invention will become apparent in the claims and in the following description of two exemplary embodiments that are not limiting the scope of the invention and are explained in more detail with reference to the drawing.
- Fig. 1: is a perspective view in the form of an assembly drawing of a bearing and disk brake unit,
- Fig. 2: is a perspective view in another viewing direction but still in the form of an assembly drawing of the unit according to Fig. 1,
- Fig. 3: is a perspective sectional view with a cutting plane defined by the rotational axis of the hub and the cylinder's axis of the cylinder and piston unit,
- Fig. 4: is a perspective assembly drawing in the form of a detail taken from the complete unit illustrating two brake disks, one hub, one wheel bearing and one external joint, again in the form of an assembly drawing,
- Fig. 5: is a perspective sectional view of a drag bearing, the cutting plane being again defined by the rotational axis and the cylinder's axis of the cylinder and piston unit, and
- Fig. 6: is a sectional view in a radial plane of a second embodiment of the brake disk with hub.

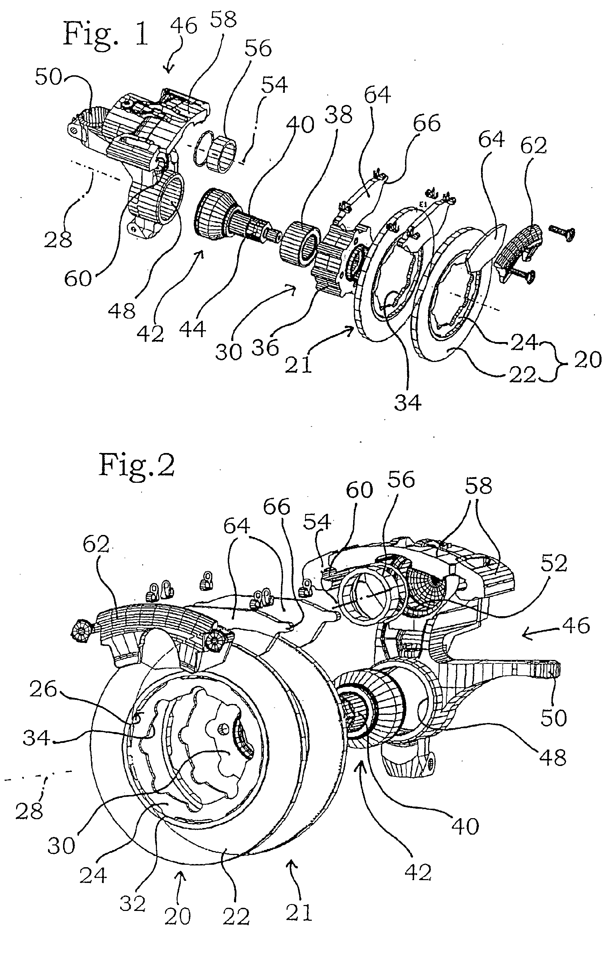

The bearing and disk brake unit shown in the Figs. 1 through 5 has two brake disks 20, 21 that are built according to the same principle. Each of them is comprised of an outer ring 22 and of an inner ring 24. The outer ring 22 is substantially configured as a friction ring, in the embodiment of concern it is made of metal. Another material is possible. On its inner surface it has pockets 26 which are open to the inside and extend in radial direction. The radial direction refers to a rotational axis 28 which is shown in dash-dot line in the Figures. It is the rotational axis of a wheel which is not illustrated herein and can be attached to a hub 30 which is provided for this purpose with receiving holes for wheel studs. The terms axial, radial and in circumferential direction refer to said rotational axis 28.

Fingers 32 project radially outward from the inner ring 24. Said fingers 32 are dimensioned in such a manner that they mesh with the pockets 26. They fill them up in cross section. As a result thereof, inner ring 24 and outer ring 22 are solidly joined together both in circumferential and in axial direction. In radial direction, the outer ring 22 can move away from the inner ring 24. This occurs when the outer ring 22 is heated by braking and expands outward. The EP 01 102 314.0 is incorporated into this disclosure by reference.

The inner ring 24 forms an internal casing which is non circular. In the embodiment of concern, it is substantially bounded by a cylinder which additionally has eight semicircular recesses. Said recesses form inner dogs.

The hub 30 has an external casing 36 which has, in axial direction, the same shape as the internal casing 34, it has outer dogs. As a result thereof, the inner ring 24 accurately fits the hub 30. The inner ring 24 can be displaced in axial direction relative to the hub 30, movement in circumferential or in radial direction however is not possible. A wheel bearing 38 is located on the same axis as the hub 30 and in the immediate proximity thereof. In the assembled condition of the unit, said wheel bearing is seated on a bearing face 40 of an external joint 42. Said joint has a non circular region 44 with a trochoidal cross section which is axially offset relative to the bearing face 40. An inner recess of the hub 30 has a mating cross section. In this way, the hub is non-rotatably connected to the external joint 42. The EP 01 101 247.3 is incorporated into this disclosure by reference.

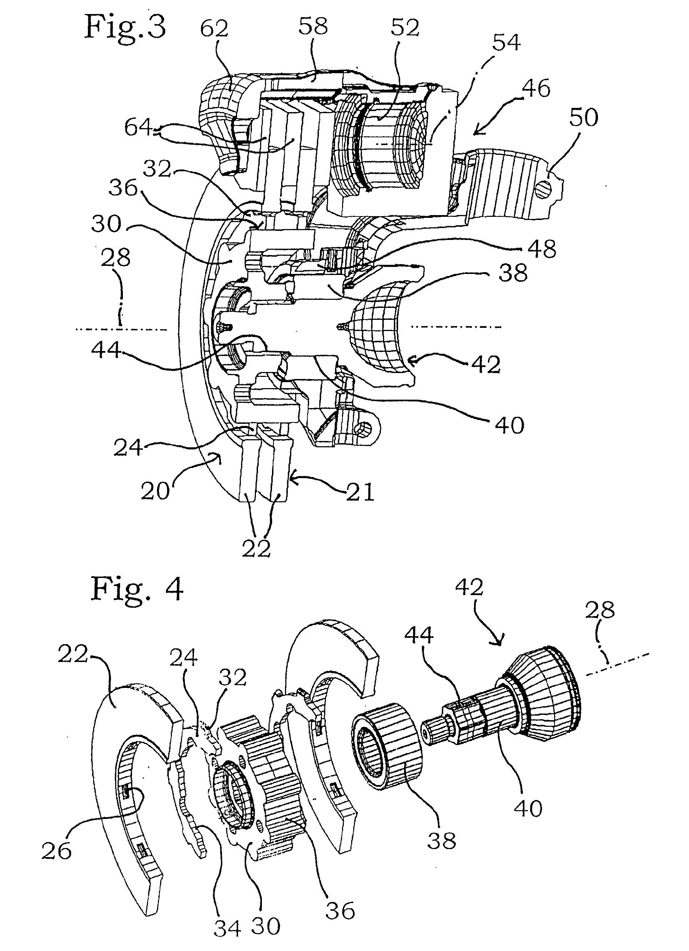

A drag bearing 46 forms a wheel carrier 48; Fig. 3 shows the wheel bearing 38 in an assembled condition. The drag bearing has several holding devices 50 for the fastening thereof. The drag bearing 46 furthermore has a region which is configured integral with said bearing and in which a cylinder 52 of a cylinder and piston unit is arranged. The cylinder's axis 54 is parallel to the rotational axis 28. A piston 56 is slidably guided in said cylinder 52.

In immediate proximity to the piston and on its side which is turned away from the rotational axis 28, a guide arm 58 projects in one piece from the drag bearing 56. In its assembled condition it covers the brake disks 20, 21, compare Fig. 3. It forms two guide ways 60 that are facing each other inside thereof, said guide ways having an almost circular cross section but being open on the side by which they face each other.

The guide arm 58 has a free end. In the assembled condition, an end piece 62 is placed onto said free end. Said end piece is connected thereto by way of two lateral studs engaging into threaded blind holes (not shown) of the guide arm 58. The threaded blind holes are oriented parallel to the rotational axis 28.

Altogether three brake pads 64 are provided, said brake pads receiving between them the outer rings 22 of the brake disks 20 and 21. The brake pads 66 have two guide means 66 each which are configured as lugs pointing toward each other in opposite directions. They engage in the guide ways 60. The brake pads 64 are retained by the guiding means 66 and can be displaced within the guide ways 60, parallel to the rotational axis 28.

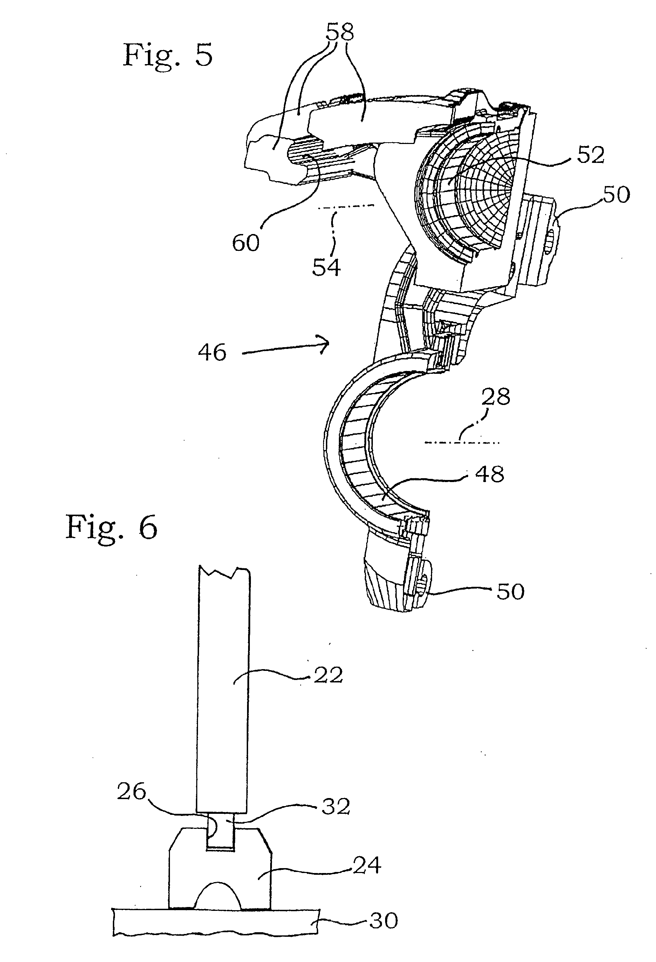

Fig. 6 is a diagrammatic view of an inner ring 24 made of ceramics. It has pockets 26 extending radially inward from the outside region of the inner ring 24. The outer ring 22 is made of metal by a compound casting method. As a result thereof, its fingers 32 fill up the pockets 26. The inner ring has a recess, which reduces the contact surface of the hub 30.

## Claims

1. A drag bearing (46) of a bearing and brake unit for a vehicle wheel, the drag bearing (46) having a) at least one holding device for fastening the drag bearing (46), b) an integrated cylinder (52) of a cylinder and piston unit provided with a cylinder's axis (54) and c) a wheel carrier (48) which is centered on a rotational axis (28) and is configured to receive a wheel bearing (38), wherein the drag bearing (46) is furthermore provided with d) a guide arm (58) which is connected integral with the remaining drag bearing (46), which is oriented substantially parallel to the rotational axis (28) and to the cylinder's axis (54) and which is provided with guide way(60)s serving to receive brake pads (64).

2. The drag bearing (46) of claim 1, wherein the guide arm (58) has a free end, wherein an end piece (62) is provided for which may be placed onto the free end and is detachably fastened to the guide arm (58) by means of mounting screws.

3. The drag bearing (46) of claim 1, wherein the guide way(60)s and the cylinder (52) of the cylinder and piston unit are manufactured in one and the same setting of the drag bearing (46) so that they have the largest possible parallelism.

4. The drag bearing (46) of a bearing and brake unit of claim 3, wherein the wheel carrier (48) too is machined in the same setting of the drag bearing (46).

5. A bearing and brake unit with a drag bearing (46) of claim 1, wherein an external joint (42) is provided within the wheel bearing (38), wherein the external joint (42) is provided with a receiving surface for the wheel bearing (38) and, axially offset relative thereto, with a non circular region with a trochoidal shape in cross section in which the external joint (42) is connected to the hub (30), which is formed accordingly on its inner recess.

6. A bearing and brake unit with a drag bearing (46) of claim 1, wherein a hub (30) rotating about the rotational axis (28) is provided, wherein the hub (30) is provided on its external casing (36) with outer dogs, wherein at least one brake disk (20) having an internal casing (34) which is in contact with the external casing (36) and has inner dogs is provided, so that the brake disk (20) may be displaced relative to the hub (30) in the direction of the rotational axis (28) but is solidly connected to the hub both in circumferential and in radial direction.

7. The bearing and brake unit with a drag bearing (46) of claim 6, wherein the brake disk (20) is provided with an outer ring (22) and with an inner ring (24), wherein the inner ring (24) only forms the internal casing (34) with the inner dogs, wherein the inner ring (24) and the outer ring (22) are non-rotatably linked together, wherein the outer ring (22) only is provided with a friction ring, and wherein means are provided which prevent heat from being transmitted from the friction ring to the internal casing (34), said means being arranged between friction ring and internal casing (34).

8. The bearing and brake unit with a drag bearing (46) of claim 7, wherein the means are provided on the one hand with fingers (32) extending radially from a ring (outer ring (22) or inner ring (24)) and on the other hand with pockets (26) which are arranged on the other ring, are radially accessible and into which the fingers (32) engage in such a manner that radial movement between fingers (32) and pockets (26) is possible, movement in circumferential and axial direction however not.

9. The bearing and brake unit with a drag bearing (46) of claim 7, wherein the inner ring (24) is made from a material with very low thermal conductivity, more specifically from ceramics.

10. The bearing and brake unit with a drag bearing (46) of claim 1, wherein at least two brake disks (20, 21) are provided, wherein a hub (30) formed by at least two hub portions is provided, each hub portion being assigned to a respective one of the brake disks (20) only and wherein the hub portions are solidly connected together to form one complete hub (30).
